# EUROPEAN PATENT APPLICATION

(11) **EP 1 338 959 A1**
(43) Date of publication of application: **27.08.2003**
(21) Application number: 02447023.9
(22) Date of filing: 15.02.2002
(51) Int. Cl.: G06F 9/44

(54) **Universal customisation tool for providing customised computer programs**

(71) Applicant: Hackin Fernandez, Karin Henriette, 1000 Brussels (BE); Hernandez Cabrales, René, La Lisa, Ciudad de la Habana (CU); Seijas Jiménez, Adrian, Diez de Octubre, Ciudad de la Habana (CU); Menéndez Gonzales, Janios, Boyeros, Ciudad de la Habana (CU); Castillo Diaz, Miguel, Vedado, Ciudad de la Habana (CU); Transnico Technologies S.A., 1637 Luxembourg (LU)
(72) Inventor: Hackin Fernandez, Karin Henriette, 1000 Brussels (BE); Hernandez Cabrales, René, La Coronela, La Lisa Ciudad de la Habana (CU); Seijas Jiménez, Adrian, Diez de Octubre, Ciudad de la Habana (CU); Menéndez Gonzalez, Janios, Boyeros, Ciudad de la Habana (CU); Castillo Diaz, Miguel, Vedado Ciudad de la Habana (CU)
(74) Representative: Van Malderen, Joelle

(57) **Abstract**

The present invention is related to a method for providing a customized computer program (10) to an end user (2), comprising the following steps:
- Providing a plurality of program elements, and
- Creating an interface arranged to access a group of program elements (3) selected from said plurality of program elements,
Characterized in that said interface and said group of program elements is customized for use by said end user (2).

## Description

### Field of the invention

The present invention is related to a method and to a software tool for providing a customised computer program to an end user.

### Background of the invention and State of the Art

Most operating system interfaces are nowadays based on the same or similar concepts regarding user interaction. Intuitive interfaces, icons, dialog windows, contextual windows, and many more have been developed and are widely used as to provide a more intuitive and thus easier user interface for applications. One of the most useful of these new features is the provision of dynamic menus in proposed applications (such as the word processor), giving the user the opportunity to customise the functions he wants to access quickly by adding them to pop-up or scroll-down menus. The use of macro programming enhances further the flexibility of such programs. A current trend is to provide so-called "skins" which can change the external aspect of a user interface to conform more to the user's personal preference.

A system of a universal personalization (of information applications) has based its concept upon the capacity to have interaction between different applications. (Due to the specific architecture presented in the Office System). Such application is, for example, an incorporation of objects in other applications and options of a textual menu (for example, a specific and personal option in the edition of a text presented in the translation menu of Microsoft Word).

Such program does not only exchange information or does not only include the introduction of additional objects, but in many cases its conception enables it to send and/or receive functional calls, new elements, etc. from other applications independently of its capacity to be processed.

Different types of interactions (between multiple applications) are also well known (OLE, DDE, ACTIVEX, DCOM, etc.), but consist of connections between the operating systems.

Furthermore, in an exchange layer an intermediate level of connections allowing said interaction should be developed. For instance, Microsoft System has developed the platform .NET created for the .NET framework, in CLR (Common Language Runtime) with the aim that the developed applications have a common base of interaction in any language.

This development allows furthermore, an access to the different common elements present in a process of interaction between two applications. This implies that said elements not only participate in the interaction between connected systems, but it is a third application (which is not inserted directly in the system) that uses, for its internal processing, data packages and the objects of the exchange.

By said processing, it is possible to create accesses to elements of said interaction. An example of said development, are the distributed applications which through multiple layers (multi-tiers) allow isolation as a "client", of the specific service application which constitutes, however, the elements of said interaction.

Other examples are the so-called sniffers that can listen (without being introduced directly into said interactions) data exchanges between two applications discontinuously connected.

At the moment, it is however impossible to control efficiently applications at a function-level. None of the prior art programs allow to change the functionality of the program or to completely parameterise the application software.

### General description of the invention

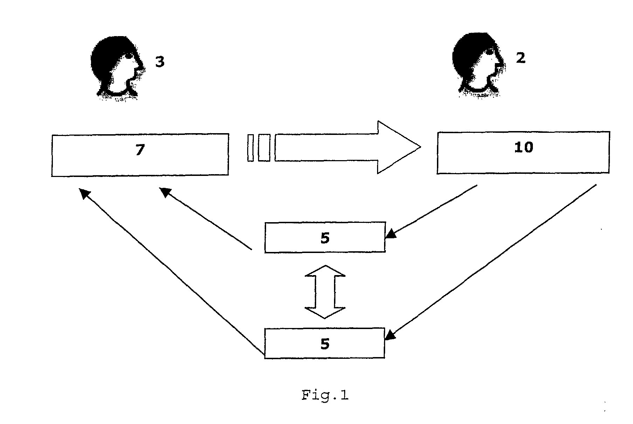

The present invention concerns a method for providing a customised computer program to an end user, comprising the following steps:
- providing a plurality of program elements (or source applications) and
- creating an interface (management applications) arranged to access a group of said program elements (personalized application) selected from said plurality of program elements (source applications), wherein said interface and said group of program elements are customised for use by said end user (see figure 1).

Therefore, said method allows the development of specific management applications which allow the end user to organise, to classify (or in other words, personalise) the calling and the execution of internal functions based upon said plurality of program elements (source applications) which have the capacity to interact between themselves.

Therefore, the management applications of the present invention are developed by a first category of users (advanced users) but are presented for and to final end users (costumers) who will create the personalized application.

In said case, the end user (or costumer) does not need tools or experience in programming, but will only need an explanation of the system and/or the tools which exist and which are provided by the advanced user.

The plurality of program elements (or source applications) are all kinds of applications which have the capacity to interact with other programs through known means already described in the state of the art (for example: CorelDraw, ADOBE Photoshop and modules of AMIS, such as GENERAL ACCOUNTING, PAYROLL, etc.).

Management applications means, methods, mechanisms, environments, services and systems created by the advanced user and developed with the objective to have an access to the internal functions of the source applications, which are grouped together and are accessible to the final user(s) (costumer(s)) in order to create a personalized interface (preferably, configured and elaborated in order to allow the possible end user to create his own data flow).

Personalized application(s) are the end products created from management applications. They are called personalized applications, because the end user is the one who will select the specific access to the internal functions of the various information flows of said source applications and which groups them according to its needs (for example, by the AMIS explorer described hereafter).

Flow of information or data are the entry and exit elements that are involved in the interaction between applications (for example, identification parameters of various functions).

Internal functions are the principal objectives of the developed software (which means open documents, translations, creation of databanks, etc.).

### Description of a preferred embodiment of the present invention

The present invention relates to a universal tool for preparing user interfaces and specifically tailored for an end-user. Said universal tools are arranged to be operated by a person who does not have to be a qualified programmer, e.g. the end user. The universal tool of the invention provides completely customised computer programs ready to use for all kind of applications, said programs not only being customised in their functionality (so that only the necessary functions are included), but also in their interface(s), giving thus the opportunity to provide a fully intuitive interface to the end user of the customised program.

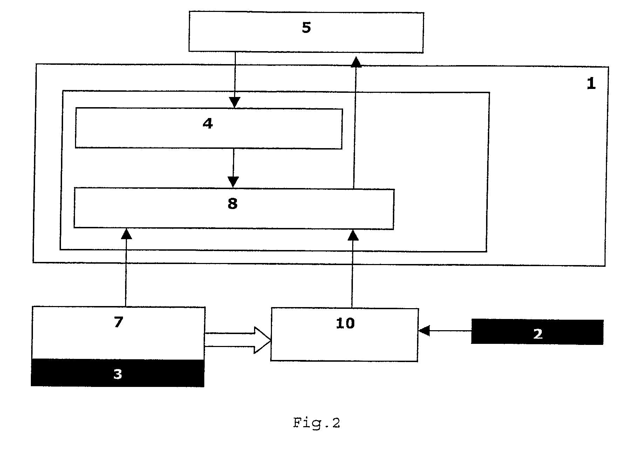

### Example 1: Extension of the various functions of an operating system (see figure 2)

An operating system 1 is the interface between the hardware of the computer and the users of these, allowing so can be used in a good way the resources of the same ones.

There exist two types of active users of said operating system: the developer 3 of the software and the final user 2. There are a series of services dedicated to the user for performing several tasks, for example, a web page server, an e-mail server, etc.

Such operating system is also dedicated to the advanced users in order to create their own service, to provide and allow the personalization of the working environment and is particularly adapted for the end user's profile.

In said example, the operating system 1 is adapted in order to allow a specific personal interaction between the internal sources functions of a specific application and the tools for having an access to them.

The Windows™ operating system has been widely used throughout the world and its configuration presents a format suitable for data exchange between applications and comprises also means for handling said interaction called the InterProcess Communication (IPC).

Therefore, the applications are classified into clients and servers according to the their role they play in said interaction. The client is the process or the application which requests a service to another process or another application. The server is the process or the application which responds to the client's request.

Therefore, the source applications of the present case are designated as "servers" and the personal applications are designated as "clients". Thus, it is clear that for each application, even if its internal functions are accessible, has the behaviour of a "client" or a "server" according to the fact that they provide or they receive a service.

For allowing the possibility to each application to share their internal functions and have an access to other functions, it is necessary to extend the API of the windows through a set of new functions dedicated to said request, through an internal help desk. Therefore, the interface between internal functions is distinct from the different applications.

Said mechanism is divided in several layers according to its responsibility level. The first layer (or layer of function administration 4) is dedicated to the recording of the internal functions of the sources applications 5, while the second layer (dedicated to an access control of the different functions 8) executes the calls or requests to the different functions. Said layers contain the required software which constitute the API functions of Windows™.

In the present case, the management application will be constituted by said new functions and their tools for creating the personalized applications which interact with said functions (see figure 2).

### Management tools (7)

Said tools (7) are compiled by a software developer 3 (or advanced user) which will create a mechanism which allows the information flow between the different functions the final user requests they interact between them. Through said tool, it is possible to create calls to the internal functions classified and grouped by the user according to API functions presented in the Windows™ operating system.

### Administration of the functions (4)

A source application (for example: Word, Excel, etc.) which is set up in the operating system 1, records through the administrator of functions all the internal functions that its creator consider as being accessible to the other applications.

In said step, the information aimed for allowing interaction with the functions of the applications are only conserved and are published (the other users have access to them).

The administrator of functions is therefore able to check the consistency of said information so that the applications are published in its register of functions for a correct interaction between them.

The register of functions is put into connection with a database of an internal format or a commercial format, such as: Access, SQL server, Oracle or DBF databases. The Windows™ register could be also used to receive said register of functions. It is only the user having the characteristics of a system administrator who has a direct access to the information, corresponding to each function and its respective description.

Hereafter are described the various data which characterise a new function group in the same register. They can be:
- IdFunction: unique and internal identificator that the operating system gives to each new function
- Name: name of the function
- Description: synthetic description of the function
- Version: registered version of the function
- Licence: licence of the registered product (useful for the control of the various licences related to the registered products)
- Product: name of the product which contains the registered function
- Company: name of the company that has created the product
- Descriptor of the entry data: definition of the interaction with entry data
- Descriptor of the exit data: definition of the interaction with exit data
- Descriptor of the data: the descriptor of the data can be exit or entry data descriptor according to the characteristics of the data. In a descriptor, the necessary information is collected in order to allow the most adequate interaction with the internal function of an application. A descriptor could be characterised as:
   - IdDescriptor: a unique and internal identificator of an operating system dedicated to each descriptor
   - Entry/Exit: specifies if the interaction is an entry interaction or an exit interaction
   - Description: synthetic description of the descriptor
   - Interaction type: interaction type through which one has an access to the function or to all types of interaction with the applications provided by the Windows™ IPC
   - Number of parameters: amount of parameters that possess as a maximum the function for its correct working
   - Parameter listing: list of parameters of a group of finished elements which describe each of said parameters which are send to the function, its number should not be higher than the one specified in the "number of parameters".

Each of the elements of the listing can be represented as:
- an IdParameter: unique and internal identificator that the operating system gives to each descriptor
- Order: successive numbers which specify the order each parameter occupies in the listing
- Entry/exit: specifies if said parameter is an entry or exit parameter
- Optional: specifies if required or not that said data should be specified in the listing when the corresponding function is called
- Type: specifies the type of data which will be transmitted, for example: complete, with floating comma, character chains, etc.
- Full value: field which keeps the type of full value
- Point value: field which keeps memory areas which correspond to a special data type and which requires memory location
- Chain character value: field which keeps a type of character chain data
- Reserved field: the reserved fields are proposed for a calculated previous or internal exercise.

For registering a new function, it is necessary to prove that a method which is considered as a parameter is a register of functions ((RF) with the same structure and which is satisfactory in its execution or not and described as follows.

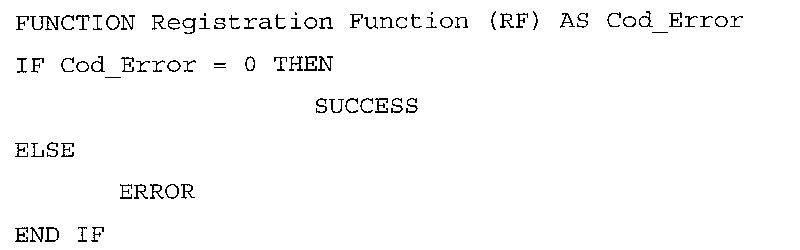

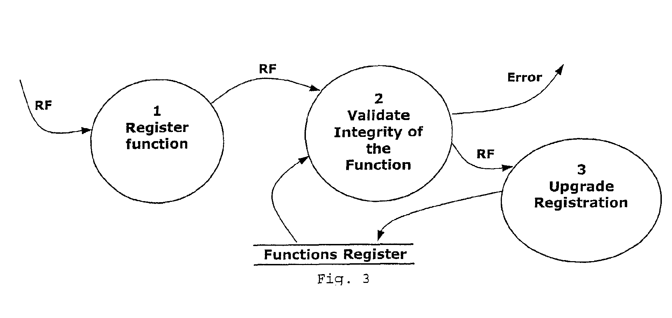

The figure 3 represents a diagram which describes the flow of the different processes of an administration of functions. The first step 1 concerns the registration of functions and comprises what is requested for the registration of a new function. The next step 2 is the step of validation of an integrated function. It checks the integration of the data. The further step 3 describes the upgrade of the registration. (Following the validation, it allows an actualisation of the data in the registration of the functions with the data received from the new function (RF)).

### Control to the access of the functions (8)

It is through said layer (8) that the other applications can interact with the published internal functions, which means that said layer constitute a kind of execution model of the functions. It allows a validation of a correct creation of requests, their descriptors and their parameter listings. The other parameters interact with the ones that are registered.

However, the person skilled in the art should take into account the interface for the documentation and the referencing by using said systems, if he has an access to the necessary information, for interacting with the registered function.

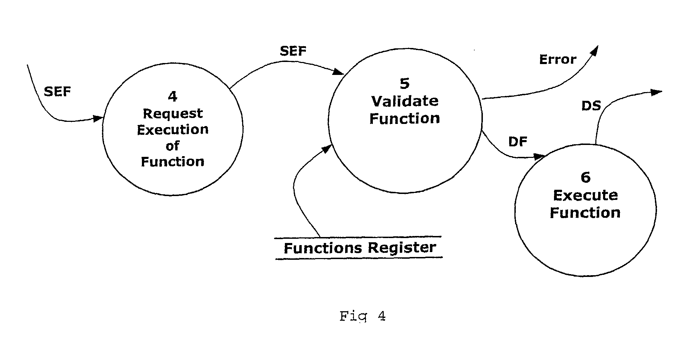

Figure 4 describes the process flow of the function access control.

### Step 4: Requesting the execution of a function

The system executes a function following a request for execution (SEF).

### Step 5: Validating a function

Following a request, one may control if its descriptors and its parameter listing are correct by checking the necessary information in the register of functions and by providing, if correct, the descriptor of the function necessary for execution or (if it is not the case), an error code is presented.

### Step 6: Execution of a function

Following the reception of the necessary information for an execution, one may execute the requested function by providing a group of data, wherein a code is inserted, in order to know if an error (or not) occurred in the parameter listing (whenever this is necessary).

For the execution of a function, one should know the processes that the access control possesses for such purposes. With the final aim for obtaining the execution of a function, the process for each step to be performed is proposed as follows:

### Step 7: Obtaining the unique identificator of the function to execute

Said step is performed by providing a request with the name of the function and the name of the product as parameters.

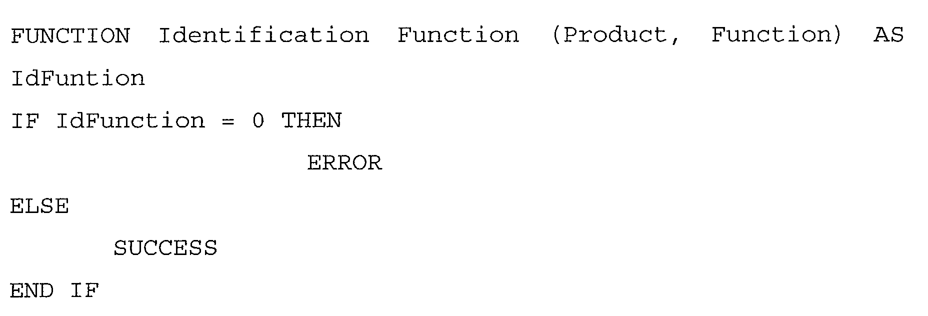

### Step 8: Initialization of the entry and exit descriptor (DD)

Said step allows the creation of the variable which will be useful to define the type of interaction with the application

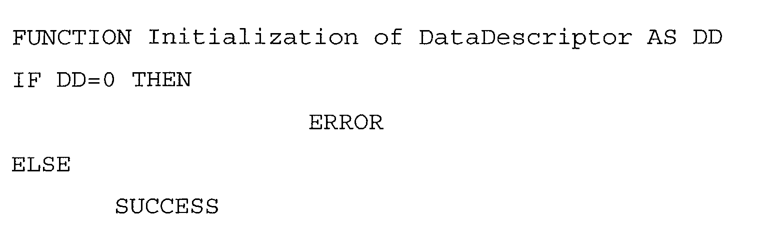

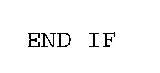

### Step 9: Initialization of the parameter listing (LP)

This step is obtained with the previously initialized variable (DD).

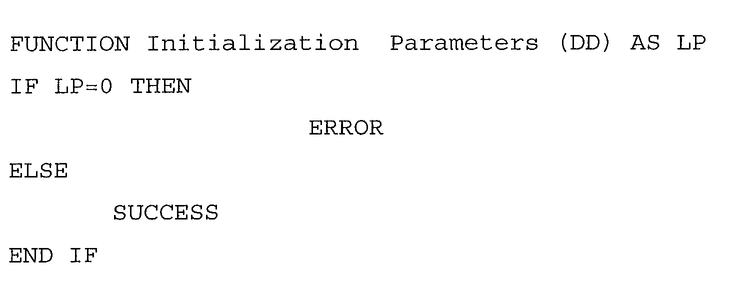

### Step 10: Execution

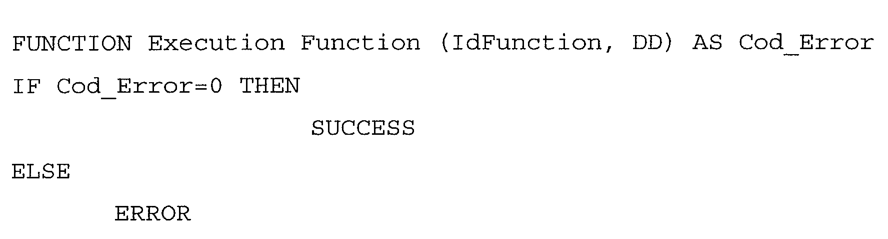

### Step 11: After execution

(If correctly performed), the result of execution is collected (collecting of all values for all parameters considered as exit parameters)

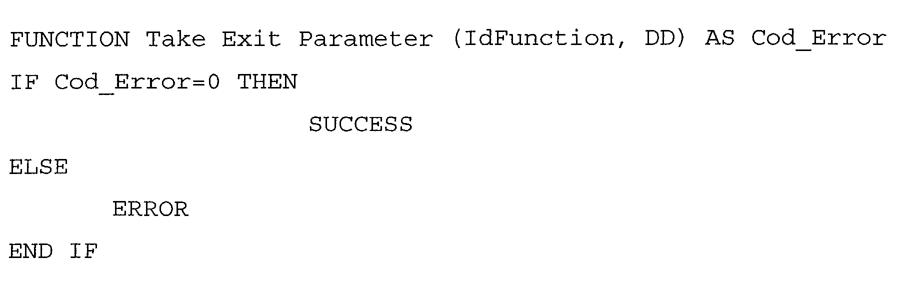

All the previous functions can be grouped into two libraries of dynamic connection or DLL which are present in the SYSTEM repertory of Windows™ or as a supplementary service.

The operating system 1 will be always the director of all functions, because it will provide the necessary mechanisms for its suitable working. This new extension form will be done, not only for each application, (as a way to increase the possibilities and the operating system), but also allow the extension of interaction with other entities which can be used as active control (without requiring by necessity an application for said purpose) which is the case for the system and method of the state of the art.

Finally, the layer 8 of the access control could be used for such purpose and a specific window could be created in the operating system, if necessary.

The whole functions of the registered applications is so important that there exist exchange and treatment forms of said information, this means that it is possible that the high amount of heterogeneous systems amplifies seriously the functions of an operating system.

This field is, however, advantageously still open to extension systems through internet, which allows that a large number of end users (costumers) can subscribe to a single functions provider for their different bank transfers, their leisure goods, for the administration of their values, etc.

Therefore, it is in the hands of the developer (advanced user) 3 that the creation of said application is provided, which allows thereafter the grouping of the functional links in order to obtain different data links between the multiple executions. The programming of the transfer or of the data flow among the functions is the key factor for obtaining a personalized integration, which is described hereafter in more detail (see example 2).

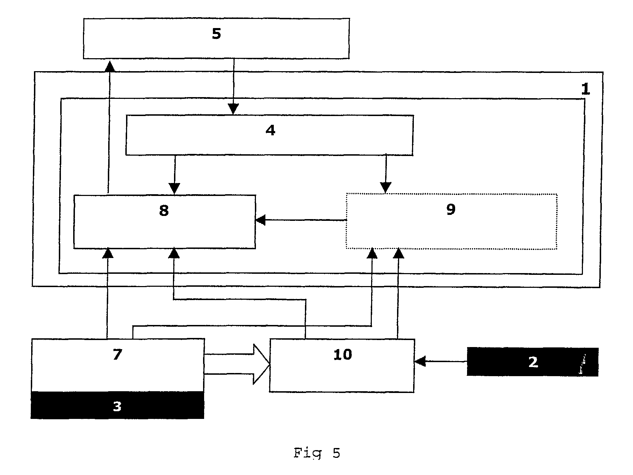

### Example 2: Personal integration of the application (see figure 5)

The first example showed the mechanism for recording the internal functions of source applications and to have an access, without interaction or without data exchange between them. The following example shows how interaction and said data exchange can be added automatically to the source applications.

Therefore, the aim of said example is to show that all processes include a determined number of heterogeneous applications in an established order and its corresponding information exchange between them is automatically obtained.

Said example is based upon the layer structure described in the example 1, to which a request of the control of data flow between functions is added. Said layer 9 comprises a link to the access control 8, because it is provided to execute the functions according to an established order by the final user 2 in his personalized application 10, by using the management application.

In order to allow an interaction and exchange of data between the internal functions in the different source applications, the API Windows™ is extended by a group of new functions dedicated to said tasks and by an internal mechanism that carries them. Therefore, there exists an automatic execution of the connected internal functions that belong to different applications.

Figure 5 describes the insertion of a control layer 9 of the data flow between functions.

### Management tools (7)

A management tool 7 is set up by a software developer 3 who treated the calls or requests directed to the classified internal functions and grouped by the advanced user through new API functions (that the operating system already possesses). This is obtained by the interaction with a control layer of data flow between applications, i.e. a new interface which does not request that the software developer maintains a management mechanism to control data exchange between functions.

### Flow control between applications

In said layer 9, the execution of each registered functions possessed by a personal application is executed automatically. Furthermore, the correct exchange between data is checked. If a function requires an exchange by memory and the next one by various files, an exchange interface will be created to provide a conversion of one type of interaction into another. In its turn, for each execution, constant interaction with the function access control is required.

Each flow is defined by its entry and exit data and it is necessary to define which ones are useful or not in each exchange.

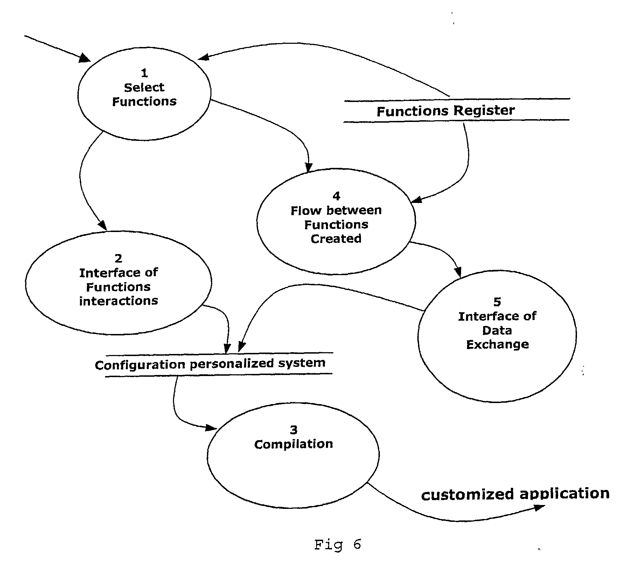

The flow between the linked functions is represented in the flow chart of figure 6.

All possible entry values are still defined during execution. These should coincide with the parameters of the entry descriptor of the first function which has been selected as the starting point of the personalized application.

Thereafter, an interaction with the second function is defined, which thereafter in the execution result will provide all the defined parameters in its exit descriptor.

The interaction between the two functions is characterized by a data flow from one to the other. However, in order to render said flow of data possible, it is necessary to create an exchange interface which describes the exit parameters of the first function which are therefore used as entry parameters of the second one and obtain thereafter the execution.

The interaction with the functions access control layer corresponds to the one described in the previous example.

In order to obtain a chain execution of an exchange of data functions between them, it is necessary to provide a series of functions for each step required:
(1) obtain the unique identificator of each function to be connected and executed
(2) initialize the entry descriptors of the first function and of the second function
(3) initialize the entry parameters of the first function
(4) initialize the association listing of the exit parameters of the first function with the entry parameters of the second function
(5) establish the connection
(6) execute the sequence
(7) collect the execution results.

### Description of the previous steps

(1) The identificator of each function is obtained through a request made with the name of the function and the product as parameters. As explained in the previous example, the *IdentificatorFunction* created for said purposes is used.
   Identificator of the first function 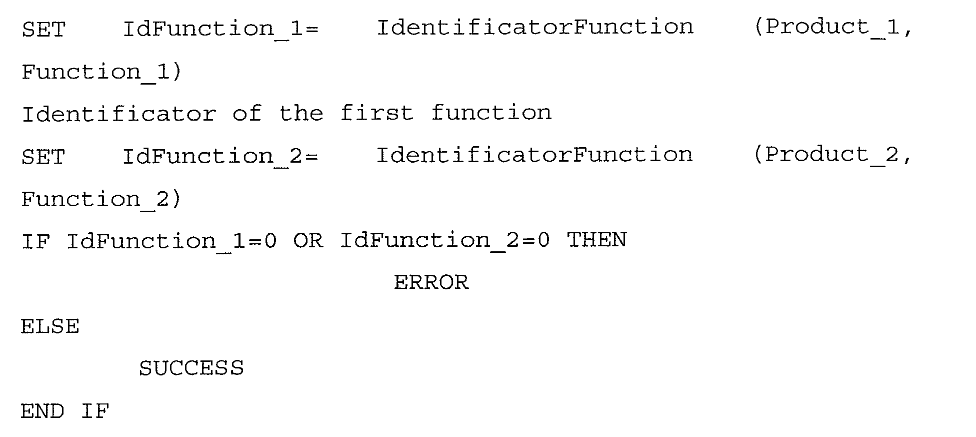
(2) The Initialization of the data descriptor (DD) could create the variable which is useful for defining the type of interaction with the application and its corresponding parameters. One may use the function *DataDescriptorInitializator* created in the previous example.
   Descriptor of entry of the first function
   SET DD 1= InitializorDataDescriptor
   Descriptor of entry of the second function
   SET DD_2: InitializorDataDescriptor 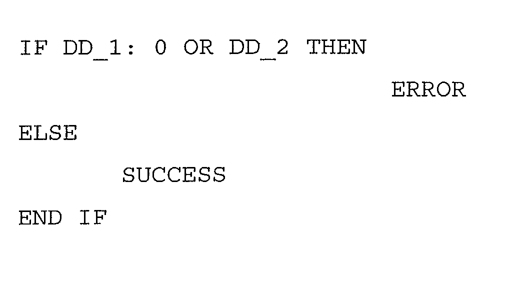
(3) With the previously initialized variable (DD_1), it is possible to obtain the Initialization of the parameter listing (LP-1) of the first function. It is therefore possible to use the function *ParameterInitializator* defined previously in the example 1. 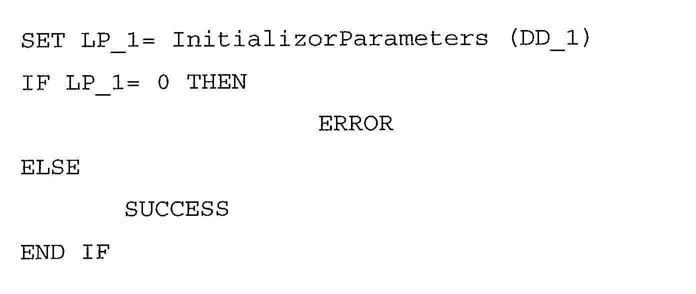
(4) Following the creation of the parameter list of the first function, it is necessary to obtain the correspondence between the exit parameters of the first function and the entry parameters of the second one. The elements of said listing should make a reference to an exit parameter and to an entry parameter and this should be obtained by the field *IdParameter* of each of them. These elements could be of the following type of structured data:
   STRUCT Association of Element
   IdParameterExit // Parameter of exit first function
   IsParameterEntry // Parameter of entry second function
   END STRUCT
   FUNCTION Initialization ListingAssociation (Nparameters)AS
   LAP 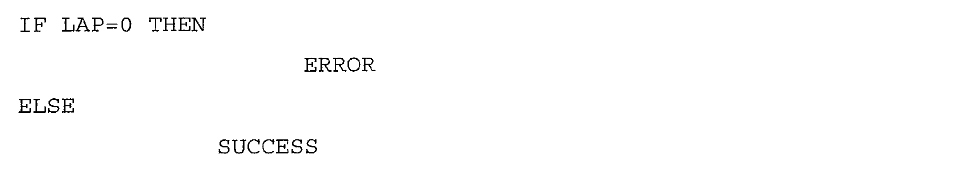 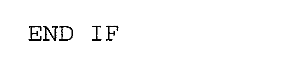 For the creation of a defined listing of associated parameters, a function which will take as entry value the number of associations to realise will be created (*NParamekers*).
(5) Thereafter, a new function involved in the treatment of parameter association listing (LAP) will be created by using the functions, which are associated by their identificators and by their corresponding descriptors. Said process is nothing else that the presentation of these successive functions. However, inside the control layer of data flow between functions is involved in the creation of the interface of data exchange. The new function of the operating system provides, at the end of its execution, a unique identificator corresponding to the successive step created. If the value is 0, the operation has created an error. 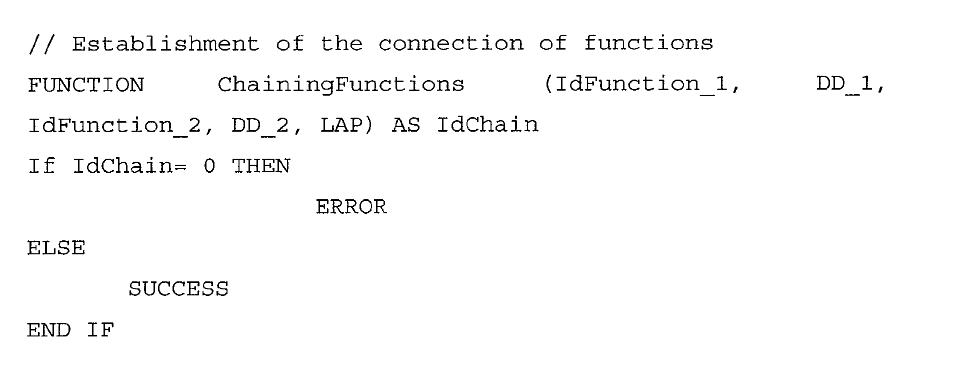
(6) As each created successive sequence comprises its identificator (*IdChain*), this is used as an entry value and the following function is in charge of the execution and provides an error code. The exit parameters of the execution of said sequence are present as references in the data descriptor of the second function (DD-2). 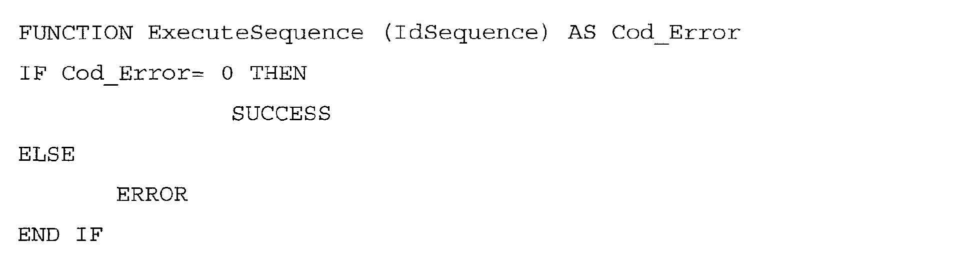
(7) The execution results can be collected in the data descriptor of the second function (DD-2) or in another descriptor, if one uses the function *TakeExitParameters* defined previously in the example 1, by using as parameter the descriptor which will collect the data and the identificator of the second function (*IdFunction_2*).

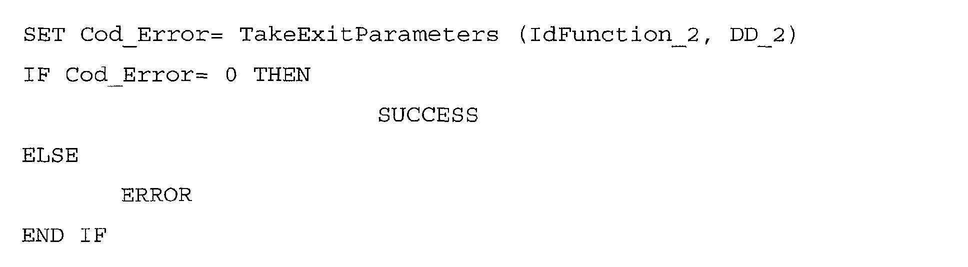

### Creation of the personalized application

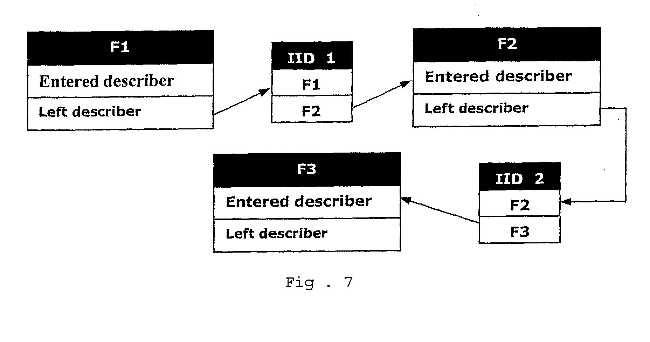

The figure 7 applies for both examples, because it shows the creation process of a personalized application through the interaction with the management tools and explains the internal working of the generation of the personalized application.

Said system comprises the following steps.

### (1) Selection of the functions

Internal functions are selected according to the type of personalized application that is required. By interacting between the function register, one may collect the necessary information for the final user, suitable for the function corresponding to his requests.

### (2) Definition of an interaction interface with the functions

In this step, the user should define the form in which the entry values of the internal function should be treated. For example, if a function has no windows to allow the entry of the data, the user can define his own windows or, in the contrary situation, he will use the developer of the corresponding source application has made.

All applied operation is conserved in the configuration of the personalized system where all the requested information is kept in order to generate thereafter the personalized application.

### (3) Compilation of the personalized application

The information conserved in the personalized system configuration is taken and one may generate the personalized application.

Said application could be an executable file or classical archive containing a list of instructions such as the treatment files present in batches (.BAT) of MS-DOS or a script.

### (4) Creating a flow between two functions or more

The end user (or costumer) can create not only the access to the functions, but he can also present them successively. This constitutes the main step in order to obtain a personalization of the interaction between the internal function, following the selection of the functions to be used, their order and their mutual interaction will be defined. For example, one may select three functions of three distinct applications (F1, F2, F3).

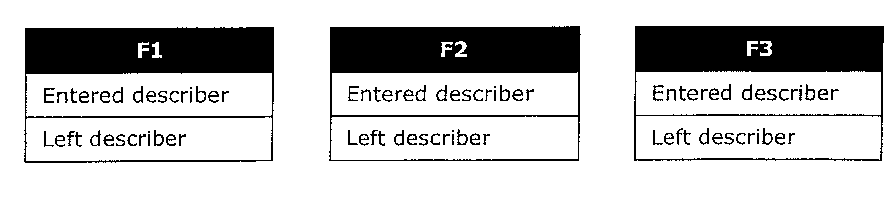

Thereafter, one may define the order in which they should be executed, for example firstly F1, F2 and thereafter F3. 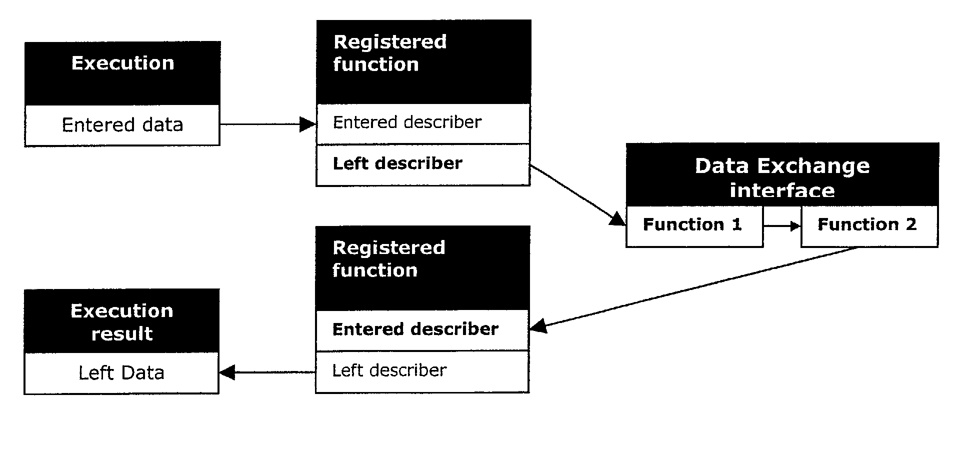 The interactions remain established for the data flow described by the entry and the exit descriptor. However, one may create an exchange interface of data (IID) in order to collect the data flowing from one function to the other.

The exit descriptors of a function provide the necessary data for the entry descriptors of the following function. It is clear that the mechanism of said IID is working in the control layer of functions flow, but the user can specify which of the exit parameters of the descriptor will be the entry parameters of the entry descriptor.

What is obtained inside the data exchange interface (IID) is integrated in the process for data flow verification which allows an exchange of the required values. This process is obtained in said layer and is characterized by the fact that the different types of data can be exchanged differently and most efficiently.

For example, the function F1 delivers in its exit descriptor a parameter which refers to the name of a file being created after its execution. The function F2 requires as one of the entry parameters the reference to a memory zone which kept the file content. Thereafter, the IID-1 will create a memory area which will keep the file content generated by F1 for allowing thereafter the execution of F2. This system applies also for full value conversion into a real value, into numeric values in a character string, etc.

### Example 3: Internal service (linked with the platform .NET)

Therefore another aspect of the present invention also concerns in said groups of options, methods or functions in one or several applications (similar or not) in the form of an explorer with variable interfaces and with extensions to the World Wide Web (allowing calling these options, methods, functions, windows, contexts of applications, located in the order, disposition, pooling level, ... anything the user defines).

Therefore, said method and tools are personal systems, customized at home or in a company, without requiring introduction of new codes, but through interactive and elementarily intuitive forms.

One can form his own application by selecting from the group of program elements provided for several options, methods and/or functions and provide an interface, e.g. a web interface to the selection of program elements.

If extended to advanced users, network administrators, ... etc it could be presented as a group of options to execute and could be combined to functional programs with a user interface by flexible and dynamic handling (for instance creation of graphic interfaces on platform like Linux, where the kernel stays to the lowest level, and interact with this through parameters).

The platform .NET developed by Microsoft Corporation is based upon a standard for the universal exchange of data (XML) and created a new paradigm, wherein the software is transformed into a collection of web services that can be distributed by using internet standard protocols.

The fact that software written in any language could have an access to said functionality executed by any kind of operating system, constitutes a suitable complement tool, wherein the user can combine the services/applications proposed and can create personally a wide variety of application of added value.

For example, a company can treat uniformly online its sales, its bank transfers, its debit-notes, its insurance services and its commercial advertising of many products through a unique and homogeneous portal dedicated to the financial administration.

The .NET platform is based upon the Common Language Runtime (CLR) which is used to administrate the needs of a code in execution. Such system guarantees a high degree of interoperativity which can create interaction standards between the applications and which allows the access to the internal functions and the exchange of parameters or objects and thereafter, will distribute their execution to the various requested levels.

For example, any end user (or costumer) could find an interest to present upon a predetermined principal page of his navigator, a group of functions which are most used or the tools important in his daily work. It is not difficult, if we take into account the communication facilities and the universal exchange of data between applications, that the user may elaborate personally a page which may comprise the options that are important for each application.

Said page will constitute the personalized application in the present example. In order to obtain such result, one may use the assistance of the advanced user who may select from the source applications the functions and the code which will generate said page with the data and the modes for using said data by the final user.

The applications/services obtained upon the basis of the standards for data exchange will be previously published on internet and will generate automatically an archive XML which describes the function when it will be called, when it will send and receive packages from XML.

Therefore, it is possible to call the web services via http by using the XML, in order to send data to the source services and from this.

### Example 4: AMIS Explorer and AMIS Explorer Configuration

AMIS is a Multi-user Integrated Management System for the financial control of corporations and subsidiaries of all kinds, including non-profit organizations. It is ready to use in the decision-making of all types of business. It allows control of a group of financial actions and at the same time classifies them in categories in order to carry out a systematic control of treasury, production and sales costs as well as clients, suppliers and debts.

The AMIS system guarantees, by means of an efficient management, the execution of the following source applications:
- In general accounting: accounting for decision making, the control of financial resources and treasury, the cost and budget preparation
- Control of treasury:
   - Stock
   - Retainer payment
   - Inventory control
   - Control of tangible and intangible fixed assets and depreciation
   - Salary payment control
   - Remuneration and salary payment control
   - Web AMIS (electronic commerce), etc.

The working platform of said system is windows. However, the process of the Universal Personalized System can apply upon all development platforms. Otherwise, one should take into account the different interaction modes with the applications and devices that the operating system provides.

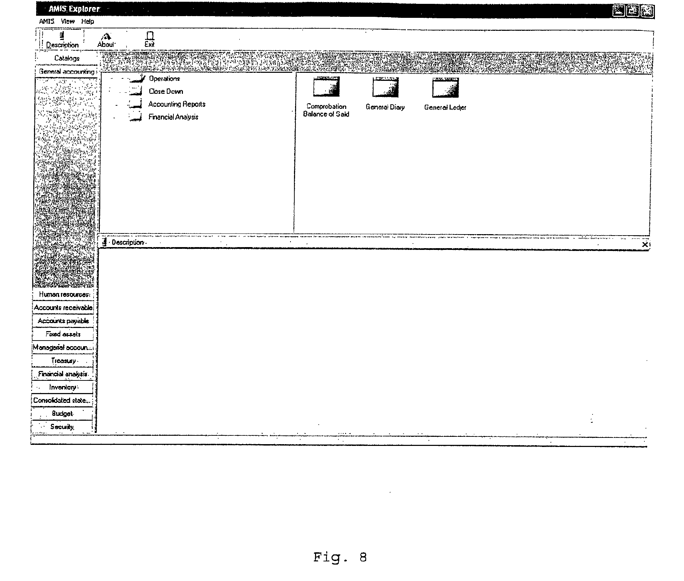

In the present case, the user has an access to all source applications from the software AMIS Explorer which constitutes the personalized application. The screen shows hereafter how the AMIS Explorer has the disposition of the inside architecture of the AMIS Explorer from a specific source application (figure 8).

Groupings of functions are presented on the left hand side of the column (cf. figure 8). In the center of the figure 8, the various options distributed are presented and defined by the user of said grouping. On the right hand side are represented the accesses to the corresponding functions. For each function, a help desk is provided.

The AMIS Explorer exposes the personalized configuration of the management system generated by the AMIS Configuration tool, which allows that the final user has an access to the internal function of the source applications of the AMIS system.

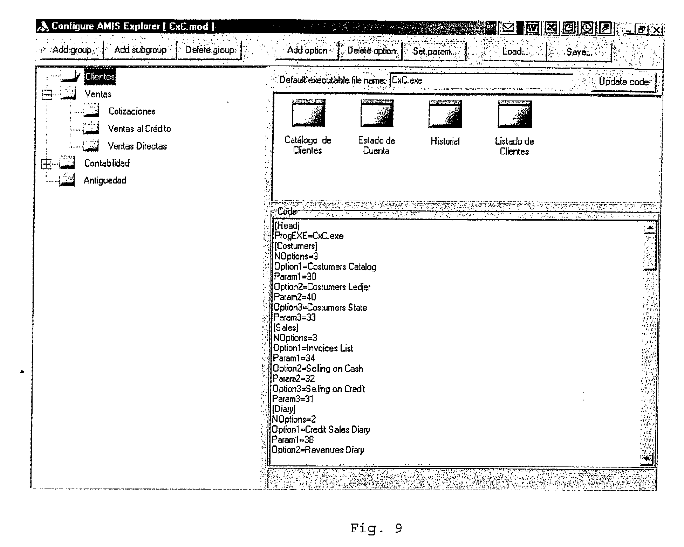

Said configuration is based upon a defined structure for the configuration file (.ini), where in the relation between the different groups and functions are conserved. The tree structure of the groups is conserved in the extension files .mod. The following figure 9 presents in which efficient and easily modifiable form the creation of the function groups is provided.

Said system provides an absolute flexibility and a liberty to setup a navigator stem.

For the configuration, for example, the grouping of accounts, one may define a tree represented on the left hand side, which corresponds to the central part of figure 8. In the windows up right are defined the accesses to the function which corresponds to the right windows of figure 8. The low window on the right of the AMIS configuration shows the coding which generates automatically what constitutes the .ini file of configuration.

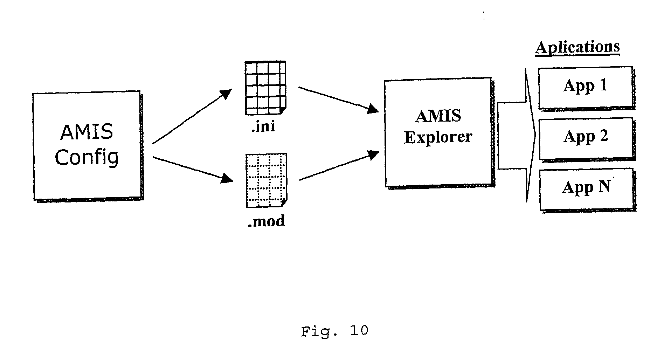

Figure 10 shows the structure of said file .ini for said personalized grouping. Said structure can be extended without inducing an alteration of the actual functionality of the AMIS explorer.

## Claims

1. Method for providing a customized computer program (10) to an end user (2), comprising the following steps:
• Providing a plurality of program elements, and
• Creating an interface arranged to access a group of program elements (3) selected from said plurality of program elements,
**Characterized in that** said interface and said group of program elements is customized for use by said end user (2).

2. The method of claim 1, wherein the program elements are selected from the group consisting of options, methods and functions or a combination thereof which have the capacity to interact with other programs.

3. The method of claim 1 or 2, wherein said interface is implemented upon an operating system.

4. The method of claim 3, wherein said operating system is Windows™.

5. The method of any of the preceding claims 1 to 4, wherein said interface comprises tools (or a layer) (4) for an administration of the functions comprised in said program elements and tools (or a layer) (8) for a control of access to said functions.

6. The method of claim 5, wherein said interface further comprises a tool (or a layer) (9) for the control of data flow between functions, comprised in said program elements.

7. Computer program comprising program code means for performing the step according to any of the preceding claims 1 to 6, when said program is run on a computer.

8. Computer program comprising program code means stored on a computer readable medium for performing the step according to any of the preceding claims 1 to 6, when said program is run on a computer.
